(19) Europäisches Patentamt
European Patent Office
Office européen des brevets

(11) Veröffentlichungsnummer: **0 301 134 B1**

(12) **EUROPÄISCHE PATENTSCHRIFT**

(45) Veröffentlichungstag der Patentschrift: **22.01.92**

(51) Int. Cl.[5]: **C09B 29/085**, D06P 1/18

(21) Anmeldenummer: **87119207.6**

(60) Veröffentlichungsnummer der früheren Anmeldung nach Art. 76 EPÜ: **0 216 339**

(22) Anmeldetag: **20.09.86**

Die Akte enthält technische Angaben, die nach dem Eingang der Anmeldung eingereicht wurden und die nicht in dieser Patentschrift enthalten sind.

(54) **Monoazofarbstoffe, ihre Herstellung und Verwendung.**

(30) Priorität: **24.09.85 DE 3533980**

(43) Veröffentlichungstag der Anmeldung:
**01.02.89 Patentblatt 89/05**

(45) Bekanntmachung des Hinweises auf die Patenterteilung:
**22.01.92 Patentblatt 92/04**

(84) Benannte Vertragsstaaten:
**CH DE FR GB LI**

(56) Entgegenhaltungen:
**EP-A- 0 031 478**
**EP-A- 0 078 006**
**CH-A- 343 560**
**CH-A- 640 560**
**GB-A- 2 108 141**

(73) Patentinhaber: **CASSELLA Aktiengesellschaft**
**Hanauer Landstrasse 526**
**W-6000 Frankfurt am Main 61(DE)**

(72) Erfinder: **Bühler, Ulrich, Dr.**
**Kastanienweg 8**
**W-8755 Alzenau(DE)**
Erfinder: **Tappe, Horst, Dr.**
**Ringstrasse 9**
**W-6057 Dietzenbach(DE)**
Erfinder: **Kühn, Reinhard**
**Heinrich Bleicherstrasse 39**
**W-6000 Frankfurt 50(DE)**
Erfinder: **Bode, Albert**
**Finkenweg 1**
**W-6231 Schwalbach(DE)**
Erfinder: **Boos, Margareta**
**Am See 6**
**W-6234 Hattersheim 3(DE)**

(74) Vertreter: **Urbach, Hans-Georg, Dr. et al**
**Hanauer Landstrasse 526**
**W-6000 Frankfurt am Main 61(DE)**

EP 0 301 134 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wertvolle Monoazofarbstoffe der allgemeinen Formel I

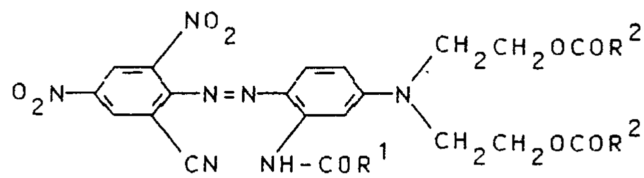

(I)

in der

$R^1$ Alkyl mit 1 bis 3 C-Atomen,

$R^2$ Methyl oder Ethyl bedeuten.

Die Erfindung betrifft auch Mischungen von Farbstoffen der allgemeinen Formel I sowie die Herstellung dieser Farbstoffe und ihrer Mischungen und ihre Verwendung zum Färben von hydrophoben Fasermaterialien.

Der für $R^1$ stehende Alkylrest mit 2 oder 3 C-Atomen kann Ethyl, n-Propyl oder i-Propyl bedeuten.

Den erfindungsgemäßen Farbstoffen ähnliche Farbstoffe sind bereits bekannt und in der CH-A-343560 und in den Deutschen Offenlegungsschriften 1544563, 2724117, 2922226 und 3025957 sowie in der US-PS 4,237,048 beschrieben. Es wurde jedoch überraschenderweise gefunden, daß die erfindungsgemäßen Farbstoffe diesen bekannten Farbstoffen im färberischen Verhalten auf verschiedenen Substraten sowie bei einigen wichtigen Anwendungs- und Gebrauchsechtheiten, wie Thermomigrationsechtheit, Thermofixierechtheit, Waschechtheit und Lichtechtheit, deutlich überlegen sind. Insgesamt ergibt sich hieraus für die erfindungsgemäßen Farbstoffe und ihre Mischungen ein nicht vorhersehbarer, erheblicher anwendungstechnischer Vorteil.

Die Herstellung der erfindungsgemäßen Farbstoffe erfolgt vorzugsweise dadurch, daß man einen Azofarbstoff der Formel II

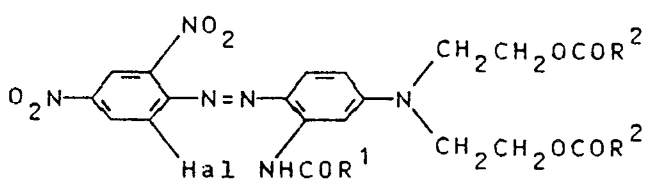

(II)

in welcher Hal ein Halogenatom, wie Chlor oder insbesondere Brom, bedeutet, in an sich bekannter Weise, z.B. nach den Angaben der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821195, der DE-OS 2715034 oder der DE-OS 2134896 einer nukleophilen Austauschreaktion unterwirft, wobei als nucleophiles Agenz das Cyanidion $CN^{\ominus}$ eingesetzt wird Bei dieser Reaktion wird in dem Farbstoff der Formel II Hal gegen CN ausgetauscht.

Als Lösungsmittel für die Austauschreaktion werden inerte organische Lösungsmittel, wie z.B. Nitrobenzol oder Glycol- oder Diglycol-mono-methyl oder -mono-ethylether oder Mischungen solcher Lösungsmittel untereinander und mit tertiären organischen Stickstoffbasen, dipolare aprotische Lösungsmitel, wie z.B. N-Methylpyrrolidon, Pyridin, Dimethylformamid, Dimethylsulfoxyd oder Dicyan-dialkylthioether eingesetzt. Weiterhin sind als Medium für die Austauschreaktion Wasser oder wäßrige Systeme bestehend aus Wasser und einem mit Wasser unmischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z.B. Pyridin und Pyridinbasen, aus.

Die Reaktionstemperaturen für die Austauschreaktion liegen normalerweise zwischen 20 und 150 °C.

Das nucleophile Agenz $CN^{\ominus}$ wird der Reaktion in Form eines gegebenenfalls komplexen Metallcyanids,

wie z.B. eines Alkali- oder Erdalkalicyanids, Zinkcyanids, Alkalicyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkalicyanid:Kupfer-I-cyanid liegt bei 5:95 bis 95:5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung der erfindungsgemäßen Farbstoffe erforderlichen Farbstoffe der Formel II können dadurch hergestellt werden, daß eine Diazoniumverbindung eines aromatischen Amins der allgemeinen Formel III

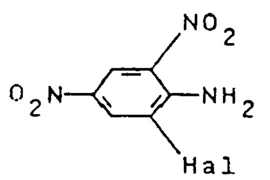

(III)

in an sich bekannter Weise mit einer Kupplungskomponente der allgemeinen Formel IV

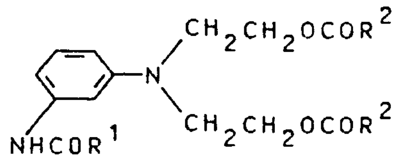

(IV)

worin Hal, $R^1$ und $R^2$ die oben angegebenen Bedeutungen haben, gekuppelt wird.

Aus den Aminen der allgemeinen Formel III werden die Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen bei Temperaturen von -15°C bis 40°C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40°C, vorzugsweise 0 bis 25°C, in einem geeigneten Lösungsmittel, wie z.B. einem Alkanol mit mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch.

In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel II kann wie üblich isoliert und getrocknet werden.

Die benötigten Kupplungskomponenten der Formel IV lassen sich aus bekannten Handelsprodukten nach bekannten Verfahren herstellen.

Ein weiteres Verfahren zur Herstellung der erfindungsgemäßen Farbstoffe besteht in der Acylierung von Farbstoffen der Formel V

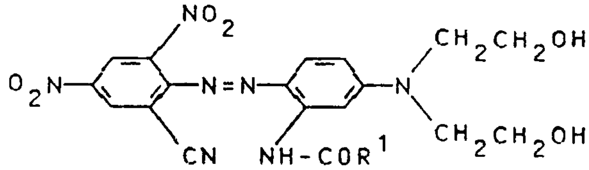

(V)

mit bekannten Acylierungsmitteln der Formel

X-CO-$R^2$,

worin X ein unter Mitnahme des Bindungselektronenpaares abspaltbarer Rest ist und $R^2$ die oben genannte Bedeutung hat, die den Ersatz der Protonen der Hydroxylgruppen durch die Gruppe -CO-$R^2$ bewirken. Als Acylierungsmittel für den Farbstoff der Formel V sind z.B. reaktive Derivate von Carbonsäuren der Formel

$R^2$-COOH,

wie z.B.Carbonsäurehalogenide, insbesondere Carbonsäurechloride oder Carbonsäureanhydride, geeignet.

Bei der Durchführung der Acylierungsreaktion ist es zweckmäßig, zur Moderierung der Reaktion in einem Lösungs- oder Verdünnungsmittel zu arbeiten. Geeignet sind alle organischen Lösungsmittel, die mit den Acylierungsmitteln nicht in Reaktion treten können Vorwiegend verwendet man aromatische Kohlenwasserstoffe, wie Benzol, Toluol, Xylol als Lösungs-, Verdünnungs- oder Dispergiermittel, wobei es zweckmäßig ist, die Acylierung ebenfalls in Gegenwart eines Säurefängers, wie beispielsweise einer tertiären organischen Aminbase, vorzunehmen. Acylierungen der genannten Art können auch in Gegenwart von Pyridin- oder Pyridinabkömmlingen als Lösungsmittel durchgeführt werden. In diesem Fall wirkt das Lösungsmittel selbst als Säurefänger. Die Acylierung mit Alkancarbonsäureanhydriden erfolgt bevorzugt im überschüssigen Alkancarbonsäureanhydrid selbst oder in der entsprechenden Alkancarbonsäure als Lösungsmittel Die Acylierung der Farbstoffe der Formel V kann bei Temperaturen zwischen der normalen Zimmertemperatur und Temperaturen bis 150°C ausgeführt werden. Pro mol des Farbstoffs der Formel V kommen in der Regel mindestens 2 mol des Acylierungsmittels zum Einsatz.

Die für dieses Herstellungsverfahren benötigten Farbstoffe der Formel V können dadurch hergestellt werden, daß eine Diazoniumverbindung eines aromatischen Amins der allgemeinen Formel III

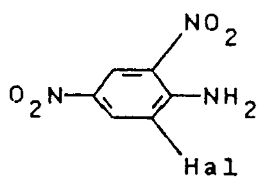

(III)

in an sich bekannter Weise mit einer Kupplungskomponente der allgemeinen Formel VI

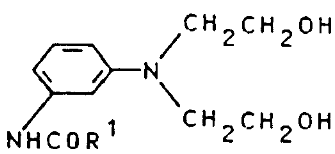

(VI)

worin Hal und $R^1$ die oben angegebenen Bedeutungen haben, gekuppelt und anschließend das Halogenatom Hal durch den Cyanrest ausgetauscht wird.

Die Diazotierung des aromatischen Amins der Formel III und die Kupplung der erhaltenen Diazoniumverbindung auf das Amin der Formel VI erfolgt im Rahmen der Bedingungen, die oben für die Herstellung der Farbstoffe der Formel II bereits ausführlich beschrieben wurden. Auch der anschließende Austausch des Halogenatoms Hal gegen Cyan erfolgt im Rahmen der oben für die Herstellung der erfindungsgemäßen Farbstoffe der Formel I angegebenen Bedingungen.

Erfindungsgemäße Farbstoffmischungen bestehen aus zwei oder mehreren Farbstoffen der Formel I, in der $R^1$ und $R^2$ die oben angegebenen Bedeutungen haben. Bevorzugt sind Mischungen aus Farbstoffen der Formel I, die sich nur in der Bedeutung des Restes $R^1$ unterscheiden.

In den erfindungsgemäßen Farbstoffmischungen kann das Verhältnis der verschiedenen Farbstoffe der allgemeinen Formel I in relativ weiten Grenzen variieren, und die Farbstoffe können als Kristallmischungen oder ganz oder teilweise in Form von Mischkristallen vorliegen. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70 %.

Die erfindungsgemäßen Farbstoffmischungen können nach verschiedenen Verfahren hergestellt werden:

1) Durch Mischen von mindestens zwei separat hergestellten und formierten Einzelfarbstoffen der Formel I. Die Mischung erfolgt in der Regel in Anwesenheit einer flüssigen Phase vorzugsweise unter Zusatz von Dispergiermitteln. Dieser Mischprozeß erfolgt bei Temperaturen von 0 bis 190 °C, zweckmäßigerweise in geeigneten Mühlen, beispielsweise Kugel- und Sandmühlen, sowie Knetern, kann aber auch durch Mischen mit der Hand oder durch Einrühren in Dispersionsmittel oder Färbeflotten bewirkt werden.

Als flüssige Phase können flüssige Dispergiermittel, organische, die Farbstoffe nicht oder wenig lösende vorzugsweise wassermischbare Lösungsmitttel eingesetzt werden. Vorzugsweise wird als flüssige Phase Wasser eingesetzt.

Als Dispergiermittel kommen solche anionischer oder nichtionischer Natur in Betracht. Als anionische Dispergiermittel seien genannt Kondensationsprodukte von Naphthalin, Formaldehyd und Schwefelsäure sowie Ligninsulfonate. Geeignete nichtionische Dispergiermittel sind z.B. in der DE-OS 27 57 330 beschrieben.

Bei dieser Mischmethode werden Farbstoffmischungen erhalten, in denen die Farbstoffe ganz oder überwiegend als Kristallgemische vorliegen, insbesondere wenn bei niedriger Temperatur gemischt wird. Bei erhöhter Temperatur und längerer Mischdauer können aber auch so hergestellte Mischungen mehr oder weniger hohe Anteile von Mischkristallen der eingesetzten Einzelfarbstoffe aufweisen.

Formierte Einzelfarbstoffe sind solche, die nach der chemischen Synthese einer Formierung, d.h. einer physikalischen Behandlung unterworfen wurden, im Verlauf derer die Farbstoffe Gelegenheit erhalten, weitgehend eine bestimmte, gewünschte Kristallmodifikation einzunehmen. Verschiedene derartige physikalische Behandlungen sind bekannt, z.B. Behandlung mit Wasser oder organischen Lösungsmitteln, vorzugsweise unter Einwirkung von Scherkräften, insbesondere Behandlung mit Wasser in Gegenwart von Dispergiermitteln. Je nach der angestrebten Kristallmodifikation und der Umwandlungsgeschwindigkeit kann die Behandlung bei Temperaturen von 0 bis ca. 190 °C erfolgen.

In der Regel wird durch Formierung eine bei erhöhter Temperatur besonders stabile Kristallmodifikation angestrebt. Es ist daher zweckmäßig, die Formierung bei Temperaturen oberhalb 80 °C, vorzugsweise 90 - 150 °C, insbesondere 100 - 140 °C, vorzunehmen.

Formierte Einzelfarbstoffe mit weitgehend einheitlicher und stabiler Kristallstruktur können aber auch dann erhalten werden, wenn der Farbstoff im Verlauf seiner Synthese die Gelegenheit zur Formierung hatte, was insbesondere dann der Fall ist, wenn er dabei auf eine Temperatur von mindestens 80 °C, vorzugsweise 90 - 150 °C, insbesondere 100 - 140 °C, erwärmt wurde. Auch hierbei können zusätzliche Mittel, wie organische Lösungsmittel und insbesondere Dispergiermittel erforderlich sein.

2) Die Herstellung der Farbstoffmischungen kann auch durch Mischen der separat hergestellten, nicht formierten Einzelfarbstoffe und gemeinsame Formierung erfolgen.

Die Mischung und gemeinsame Formierung der Farbstoffmischung erfolgt dabei in derselben Weise wie oben beschrieben. Bei diesem Vorgehen werden in der Regel Farbstoffzubereitungen erhalten, die zumindest teilweise, oft aber überwiegend oder gänzlich Mischkristalle der eingesetzten Farbstoffe enthalten.

3) Weitere Möglichkeiten zur Herstellung der erfindungsgemäßen Farbstoffmischungen bestehen darin, daß man bei der Herstellung nach einem der oben für die erfindungsgemäßen Einzelfarbstoffe beschriebenen Herstellungsverfahren geeignete Mischungen der Ausgangsmaterialien einsetzt und die so erhaltenen Farbstoffmischungen gegebenenfalls noch in der oben beschriebenen Weise formiert.

Wird z.B. bei dem oben beschriebenen Verfahren des Cyanaustausches anstelle eines Einzelfarbstoffs der Formel II eine Mischung von zwei oder mehreren Farbstoffen der Formel II, die sich bezüglich $R^1$ und/oder $R^2$ voneinander unterscheiden, eingesetzt, so erhält man die entsprechende Mischung der erfindungsgemäßen Farbstoffe der Formel I.

Selbstverständlich kann die hierbei eingesetzte Mischung der Farbstoffe der Formel II ihrerseits entweder durch Mischung separat hergestellter Farbstoffe der Formel II erhalten werden, oder sie kann durch Kupplung der Diazoniumverbindung eines Amins der Formel III auf eine entsprechende Mischung von Kupplungskomponenten der Formel IV, die sich bezüglich $R^1$ und/oder $R^2$ voneinander unterscheiden, hergestellt werden.

Es ist auch möglich, bei dem oben beschriebenen Acylierungsverfahren anstelle eines einzelnen Ausgangsfarbstoffs der Formel V eine Mischung von zwei oder mehreren Farbstoffen der Formel V, die sich bezüglich $R^1$ voneinander unterscheiden, zu acylieren Eine weitere Variante dieses Verfahrens ist die Acylierung eines Farbstoffs oder einer Mischung von zwei oder mehreren Farbstoffen der Formel V, die sich bezüglich $R^1$ unterscheiden, mit einer Mischung von zwei Acylierungsmitteln, die sich bezüglich $R^2$ voneinander unterscheiden.

Wird im Verlauf einer der beschriebenen Misch-Synthesen bei erhöhter Temperatur gearbeitet, insbesondere oberhalb 80 °C, vorzugsweise im Bereich von 90 - 150 °C, so kann bereits auf der Stufe der Synthese eine formierte Form der Farbstoffmischung erhalten werden In Fällen, in denen die Synthese bei

niedriger Temperatur erfolgt, kann gewünschtenfalls die erhaltene Farbstoffmischung, wie oben beschrieben, einem Formierungsprozeß unterworfen werden.

Bei der Herstellung der Farbstoffmischungen durch obige Mischungssynthesen wird die Mischung der Ausgangsmaterialien in bekannter Weise so gewählt, daß die gewünschte erfindungsgemäße Farbstoffmischung erhalten wird. So ist es selbstverständlich, daß man zur Herstellung einer erfindungsgemäßen Farbstoffmischung, in der a% eines Farbstoffs mit dem Merkmal A und b% eines Farbstoffs mit dem Merkmal B enthalten sind, ein Gemisch von Kupplungskomponenten der Formel IV einsetzt bestehend aus a% der Komponente mit dem Merkmal A und b% der Komponente mit dem Merkmal B.

Besonders bevorzugt sind Farbstoffmischungen, die im Verlaufe ihrer Herstellung auf Temperaturen von mindestens 80°C, vorzugsweise 90 bis 150°C, besonders bevorzugt 100 bis 140°C, erhitzt worden sind, bzw. solche Farbstoffmischungen, die aus Mischkristallen bestehen, oder Mischkristalle enthalten, die aus zwei oder mehreren der Farbstoffe der Formel I gebildet sind.

Farbstoffmischungen, die im Verlauf ihrer Herstellung auf die genannten Temperaturen von mindestens 80°C erhitzt worden sind, können dadurch hergestellt werden, daß man die Einzelfarbstoffe in Substanz oder bevorzugt in einem Dispersionsmittel, wie z.B. Wasser, 0,5 bis 3 Stunden lang auf die genannten Temperaturen erhitzt, dann abkühlt, in der Regel isoliert und dann miteinander vermischt. Die Erhitzung kann gegebenenfalls auch im Rahmen einer Umkristallisation der Einzelfarbstoffe durchgeführt werden. Die Erhitzung in Wasser auf Temperaturen über 100°C wird in einem geschlossenen Gefäß durchgeführt. Bei der Erhitzung in einem Dispersionsmittel kann der Zusatz eines oder mehrerer der weiter unten angegebenen Dispergiermittel zweckmäßig sein.

Wenn man ein aus zwei oder mehreren Einzelfarbstoffen bestehendes Farbstoffgemisch auf die vorstehend genannten Temperaturen erhitzt, werden in der Regel Mischkristalle erhalten, die aus zwei oder mehr verschiedenen Farbstoffen der Formel I bestehen.

Erfindungsgemäße aus Mischkristallen bestehende oder Mischkristalle enthaltende Farbstoffmischungen können auch dadurch hergestellt werden, daß man eine Mischung aus mindestens zwei getrennt hergestellten, verschiedenen Farbstoffen der Formel I auflöst und zur Kristallisation oder Ausfällung bringt. Zur Auflösung der Farbstoffmischung sind z.B. organische Lösungsmittel, wie Dimethylformamid, Dimethylsulfoxid, Chlorbenzol, o-Dichlorbenzol, Toluol etc. geeignet. Auch Gemische verschiedener Lösungsmittel können verwendet werden. Die Auflösung erfolgt zweckmäßigerweise bei der Siedetemperatur des Lösungsmittels oder Lösungsmittelgemischs. Beim Abkühlen kristallisieren dann Mischkristalle aus Statt durch Abkühlung können die Mischkristalle auch durch Ausfällung, d.h. durch Zusatz eines Lösungsmittels, in dem der Farbstoff weniger löslich ist, zur Abscheidung gebracht werden.

Besonders bevorzugt werden Mischkristalle erhalten, wenn man den oben erwähnten Austausch von Halogen gegen Cyan bei einem aus Farbstoffen der Formel II bestehenden Gemisch bei den vorstehend genannten Temperaturen von mindestens 80°C durchführt.

Die Mischkristallbildung kann bevorzugt auch so durchgeführt werden, daß man eine Mischung aus mindestens zwei getrennt hergestellten, verschiedenen Farbstoffen der Formel I in einem schlecht lösenden Lösungsmittel oder Dispersionsmittel anwärmt, wobei nur eine teilweise bis herab zu einer verschwindend geringen Auflösung stattfindet, und die Mischung dadurch in Mischkristalle umwandelt. Als besonders geeignetes Lösungs- oder besser gesagt Dispersionsmittel für eine derartige Umwandlung der Farbstoffmischungen in Mischkristalle hat sich Wasser bei Temperaturen von 80 bis 190°C, insbesondere 90 bis 150°C, vorzugsweise 100 bis 140°C, erwiesen. Es ist selbstverständlich, daß die Erhitzung bei Temperaturen, die nicht mehr in einem offenen Gefäß erreicht werden können, in einem Autoklaven durchgeführt werden. Der Zusatz eines oder mehrerer Lösungsvermittler ist dabei zweckmäßig. Ein solcher Lösungsvermittler ist z.B. ein in Wasser ganz lösliches Lösungsmittel, wie z.B. Ethanol, oder ein in Wasser nur teilweise lösliches organisches Lösungsmittel, wie z.B. n-Butanol.

Besonders bevorzugt wird jedoch die Umwandlung der Farbstoffmischungen in Mischkristalle durch Erhitzen in Wasser auf die vorstehend genannten Temperaturen unter Zusatz eines oder mehrerer Emulgatoren und/oder Dispergiermittel durchgeführt.

Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin-bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren Alkyl-oder Alkylaryl-sulfonate, sowie Alkyl-aryl-polyglykolethersulfate Nichtionische Dispergiermittel oder Emulgatoren sind z.B. Umsetzungsprodukte von Alkylenoxiden, wie

z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäure-amiden, wie z.B. Anlagerungsprodukte von 5 bis 10 Ethylenoxid-Einheiten an $C_8$-$C_{10}$-Alkylphenole.

Die Umwandlung der Farbstoffgemische in Mischkristalle durch Erhitzen in Wasser ist in der Regel nach 0,5 bis 10 Stunden, vorzugsweise 1 bis 3 Stunden, beendet.
Das Vorliegen von Mischkristallen kann durch Röntgenzählrohrdiagramme nachgewiesen werden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2$^1$/2-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen erfolgt in an sich bekannter Weise, vorzugsweise aus wäßriger Suspension, gegebenenfalls in Gegenwart von Carriern, zwischen 80 bis ca 110 °C nach dem Ausziehverfahren oder nach dem HT-Verfahren im Färbeautoklav bei 110 bis 140 °C, sowie nach dem sogenannten Thermofixierverfahren, wobei die Ware mit der Färbeflotte geklotzt und anschließend bei etwa 80 bis 230 °C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230 °C mit HT-Dampf, Druckdampf oder Trockenhitze behandelt wird. Man erhält auf diese Weise sehr farbstarke rotstichig blaue Färbungen und Drucke mit sehr guten Echtheitseigenschaften, insbesondere einer sehr guten Licht, Thermofixier-, Thermomigrier- und Waschechtheit, vor allem einer sehr guten M + S-Echtheit (C4A-Wäsche).

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe der Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z B Natrium-o-phenyl-phenolat und Natriumpentachlorphenolat und insbesondere sogenannten "Säurespender" wie z.B. Butyrolacton, Monochloracetamid, Natriumchloracetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglycolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt Diese Pulver enthalten den Farbstoff oder das Farbstoffgemisch, Dispergiermittel und andere Hilfsmittel, wie z.B. Netz-, Oxydations-, Konservierungs-und Entstaubungsmittel und die oben genannten "Säurespender".

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4, eingestellt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1

In eine Suspension aus 100 ml Dimethylsulfoxid, 2,1 g Natriumcyanid und 7,1 g Kupfer-I-cyanid werden bei 70 bis 75° C 60,9 g des Farbstoffs der Formel VII

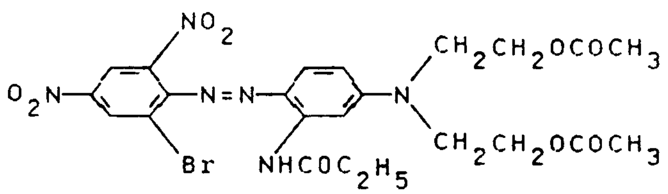
(VII)

eingetragen und 30 min bei dieser Temperatur gerührt.

Dann wird die Temperatur 30 min auf 110° C angehoben und der Ansatz anschließend langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 42,3 g eines blauen Farbstoffs der Formel VIII

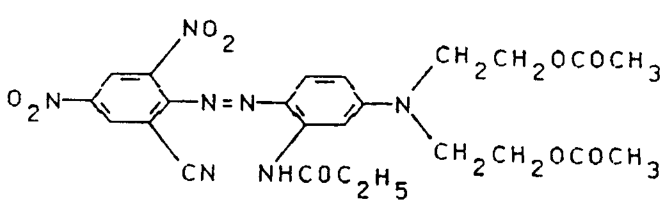
(VIII)

der bei 592 nm sein Absorptionsmaximum besitzt.

Durch einen praxisüblichen Finish-Prozeß durch wäßrige Mahlung in einer Perlmühle mit einem praxisüblichen Dispergiermittel auf Basis Ligninsulfonat und anschließende Sprühtrocknung erhält man eine färbefertige Farbstoffpräparation.

b) 1,2 g der so erhaltenen Farbstoffpräparation werden in 2000 g Wasser dispergiert Die Dispersion wird mit 3,6 ml 85 %iger Phosphorsäure versetzt, mit Natronlauge auf einen pH-Wert von 4 eingestellt und mit 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 130° C. Nach anschließendem Spülen, reduktivem Nachbehandeln mit einer 0,2%igen wäßrigen NatriumdithionitLösung während 15 min bei 70 bis 80° C, Spülen und Trocknen erhält man eine farbstarke blaue Färbung mit sehr guten coloristischen Eigenschaften, insbesondere sehr guter Thermofixier-, Thermomigrier- und Waschechtheit.

Analog Beispiel 1 lassen sich die erfindungsgemäßen Farbstoffe der folgenden Tabelle herstellen. Sie färben hydrophobe Fasern ebenfalls in vollen rotstichig blauen Nuancen mit ausgezeichneten Echtheiten.

Tabelle

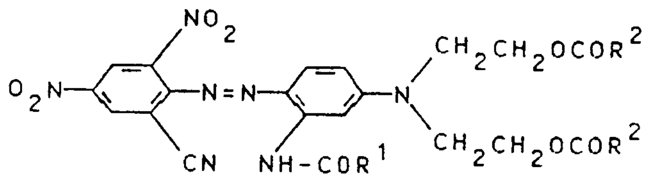

(I)

| $R^1$ | $R^2$ | Nuance auf PES |
|---|---|---|
| $C_2H_5$ | $C_2H_5$ | rotstichig blau |
| $i-C_3H_7$ | $CH_3$ | rotstichig blau |
| $i-C_3H_7$ | $C_2H_5$ | rotstichig blau |
| $n-C_3H_7$ | $CH_3$ | rotstichig blau |
| $n-C_3H_7$ | $C_2H_5$ | rotstichig blau |

**Patentansprüche**

**1.** Monoazofarbstoff der allgemeinen Formel I

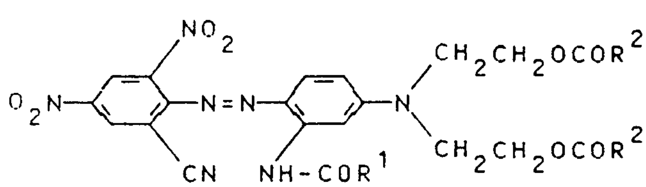

(I)

in der
$R^1$ Alkyl mit 2 oder 3 C-Atomen,
$R^2$ Methyl oder Ethyl bedeuten.

**2.** Monoazofarbstoff der Formel:

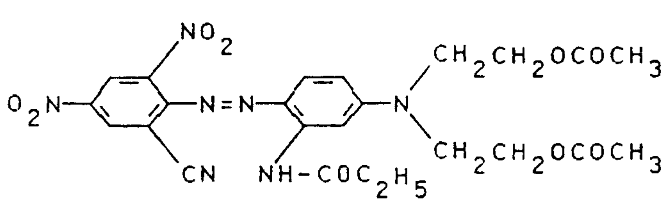

3. Monoazofarbstoff der Formel:

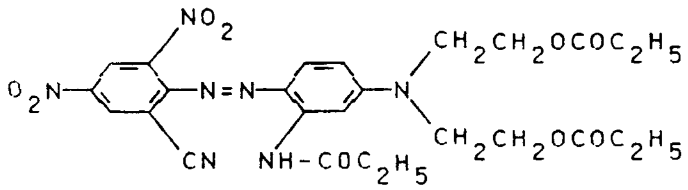

4. Monoazofarbstoff der Formel:

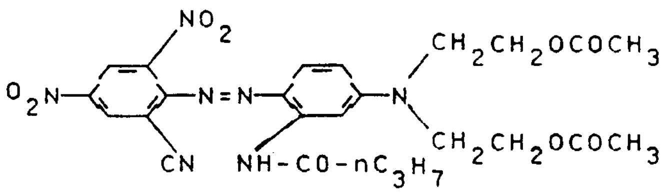

5. Monoazofarbstoff der Formel:

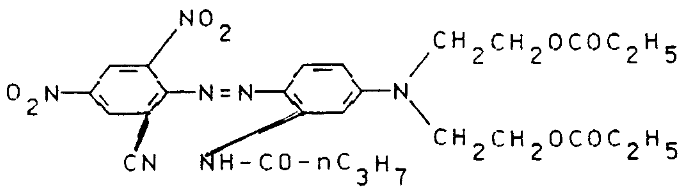

6. Monoazofarbstoff der Formel:

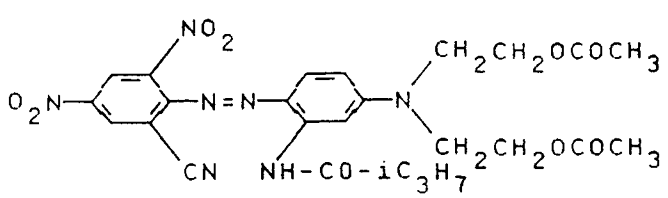

7. Monoazofarbstoff der Formel:

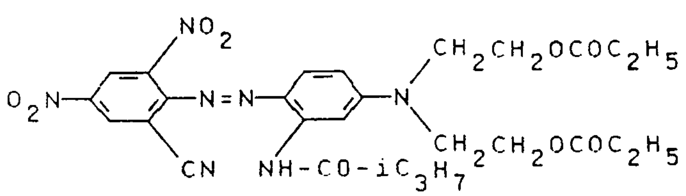

8. Mischung von zwei oder mehreren verschiedenen Azofarbstoffen der Formel I eines oder mehrerer der

Ansprüche 1 bis 7.

**9.** Verfahren zur Herstellung von Azofarbstoffen der Formel I des Anspruchs 1, dadurch gekennzeichnet, daß man einen Azofarbstoff der Formel II

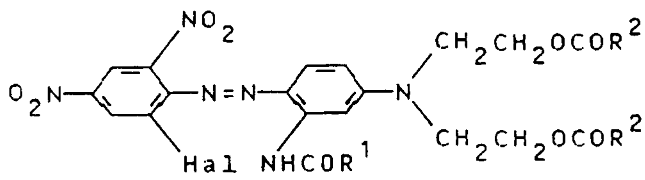
(II)

in welcher Hal ein Halogenatom bedeutet, in an sich bekannter Weise einer nukleophilen Austauschreaktion mit $CN^{\ominus}$ als nucleophilem Agenz unterwirft, oder daß man einen Farbstoff der Formel V

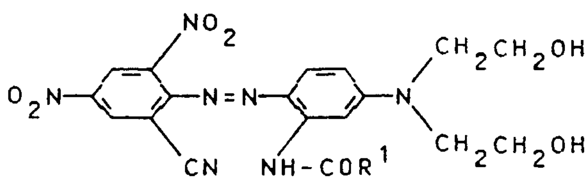
(V)

mit bekannten Acylierungsmitteln der Formel

$X\text{-}CO\text{-}R^2$,

worin X ein unter Mitnahme des Bindungselektronenpaares abspaltbarer Rest ist und $R^2$ die im Anspruch 1 angegebene Bedeutung hat, acyliert.

**10.** Verwendung der Azofarbstoffe des Anspruchs 1 oder eines oder mehrerer der Ansprüche 2 bis 7 oder der Farbstoffmischungen gemäß Anspruch 8 zum Färben oder Bedrucken von hydrophoben Fasern.

## Claims

**1.** Monoazo dyestuff of the general formula I

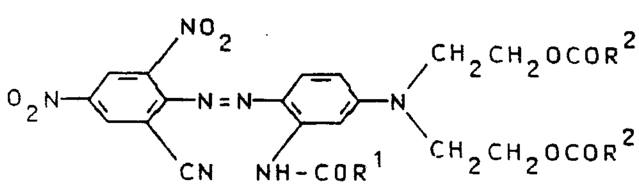
(I)

in which
$R^1$ denotes alkyl having 2 or 3 C atoms and
$R^2$ denotes methyl or ethyl.

**2.** Monoazo dyestuff of the formula:

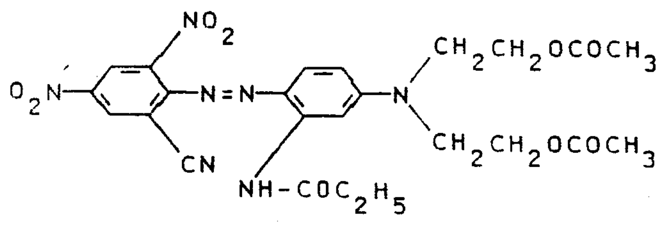

**3.** Monoazo dyestuff of the formula:

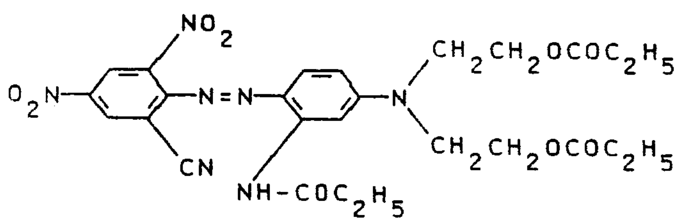

**4.** Monoazo dyestuff of the formula:

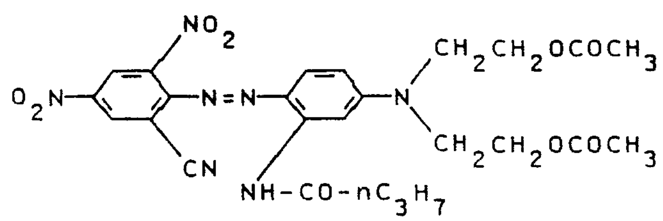

**5.** Monoazo dyestuff of the formula:

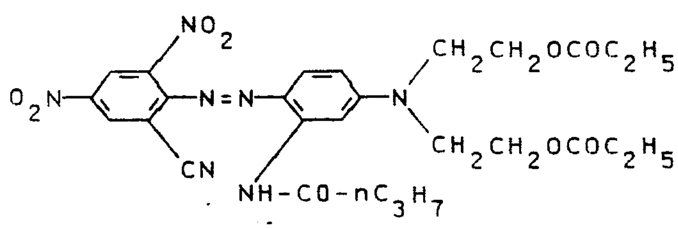

**6.** Monoazo dyestuff of the formula:

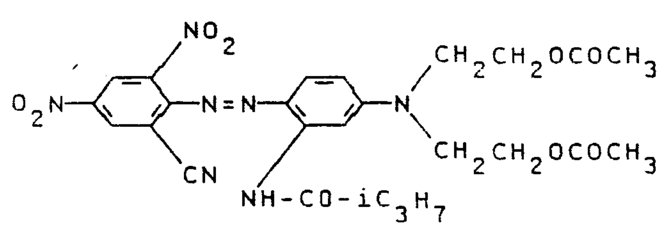

7. Monoazo dyestuff of the formula:

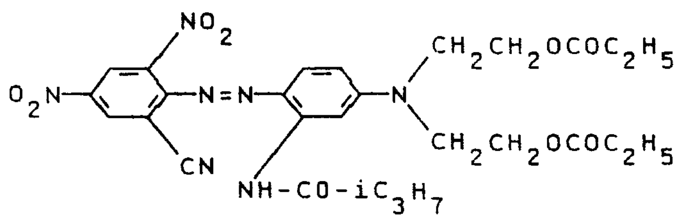

8. Mixture of two or more different azo dyestuffs of the formula I of one or more of Claims 1 to 7.

9. Process for the preparation of azo dyestuffs of the formula I of Claim 1, characterised in that an azo dyestuff of the formula II

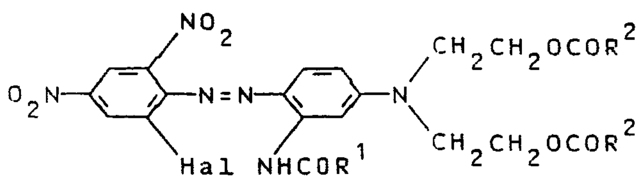

(II)

in which Hal denotes a halogen atom is subjected in a manner which is in itself known to a nucleophilic replacement reaction in which $CN^{\ominus}$ is the nucleophilic agent or in that a dyestuff of the formula V

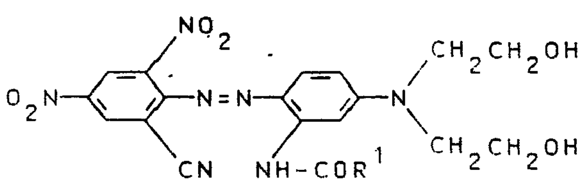

(V)

is acylated with known acylating agents of the formula

$X\text{-}CO\text{-}R^2$

wherein X is a radical which can be detached together with the bonding pair of electrons and $R^2$ has the meaning indicated in Claim 1.

10. Use of the azo dyestuffs of Claim 1 or one or more of Claims 2 to 7 or of the dyestuff mixtures according to Claim 8 for dyeing or printing hydrophobic fibres.

**Revendications**

1. Colorant monoazoïque de formule générale I :

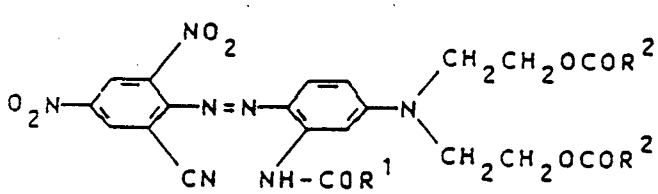

(I)

dans laquelle

$R^1$ représente un groupe alkyle ayant 2 ou 3 atomes de carbone et

$R^2$ représente un groupe méthyle ou éthyle.

**2.** Colorant monoazoïque qui répond à la formule:

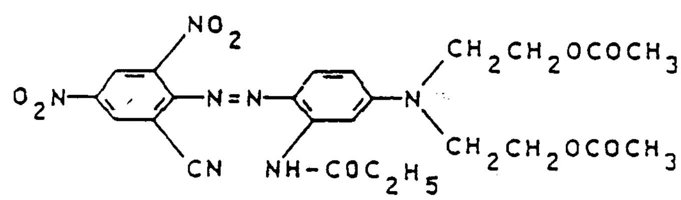

**3.** Colorant monoazoïque qui répond à la formule:

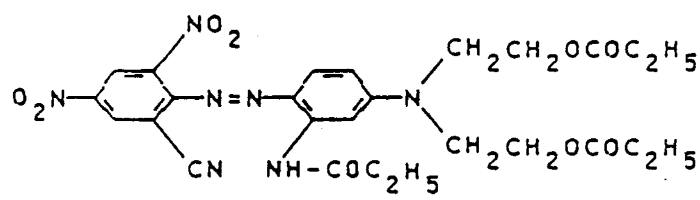

**4.** Colorant monoazoïque qui répond à la formule:

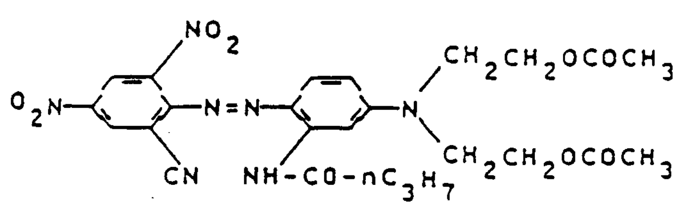

**5.** Colorant monoazoïque qui répond à la formule:

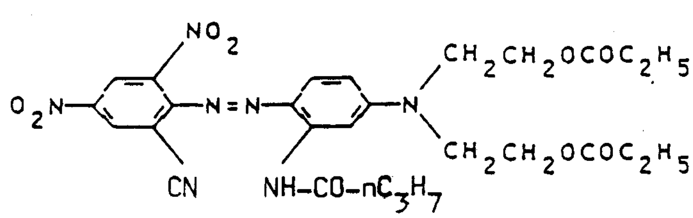

**6.** Colorant monoazoïque qui répond à la formule:

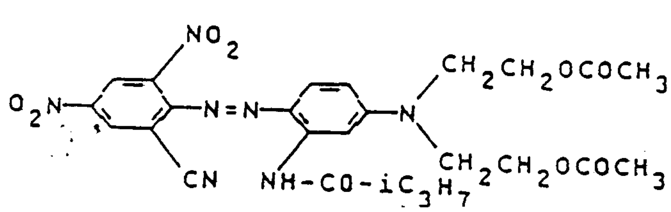

**7.** Colorant monoazoïque qui répond à la formule:

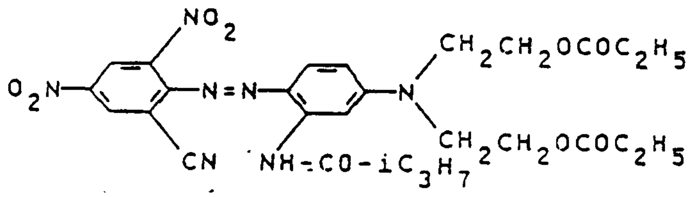

**8.** Mélange de deux ou plus de deux colorants azoïques différents répondant chacun à la formule I, selon une ou plusieurs des revendications 1 à 7.

**9.** Procédé pour préparer des colorants azoïques de formule I selon la revendication 1, caractérisé en ce qu'on soumet, de façon connue en soi, un colorant azoïque de formule II :

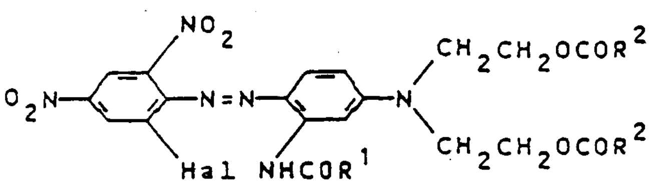

(II)

(dans laquelle Hal représente un atome d'halogène) à une réaction d'échange nucléophile avec $CN^-$ comme agent nucléophile, ou en ce qu'on acyle un colorant de formule V:

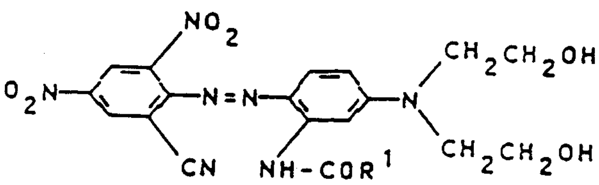

(V)

à l'aide d'agents connus d'acylation, de formule :

X-CO-$R^2$,

dans laquelle X représente un reste scindable en partant avec la paire des électrons de liaison et $R^2$ a le sens indiqué à la revendication 1.

**10.** Utilisation des colorants azoïques selon la revendication 1 ou selon une ou plusieurs des revendications 2 à 7 ou des mélanges de colorants selon la revendication 8, pour teindre ou imprimer des fibres hydrophobes.